(19) Europäisches Patentamt
European Patent Office
Office européen des brevets

(11) **EP 3 242 215 A1**

(12) **DEMANDE DE BREVET EUROPEEN**

(43) Date de publication:
**08.11.2017 Bulletin 2017/45**

(51) Int Cl.:
**G06F 12/14** (2006.01) **G06F 12/02** (2006.01)
**G06Q 20/34** (2012.01)

(21) Numéro de dépôt: **17168586.0**

(22) Date de dépôt: **28.04.2017**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **02.05.2016 FR 1653944**

(71) Demandeur: **Safran Indentity and Security
92445 Issy les Moulineaux (FR)**

(72) Inventeurs:
• **DABOSVILLE, Guillaume
92445 Issy les Moulineaux (FR)**
• **GISLARD, Philippe
92445 Issy les Moulineaux (FR)**
• **SERVANT, Victor
92445 Issy les Moulineaux (FR)**

(74) Mandataire: **Le Guen-Maillet
5, place de Newquay
BP 70250
35802 Dinard Cedex (FR)**

(54) **PROCÉDÉ D'OPTIMISATION D'ÉCRITURES EN MÉMOIRE DANS UN DISPOSITIF**

(57) Procédé d'optimisation d'écritures en mémoire dans un dispositif mettant en oeuvre un module de cryptographie et un module client faisant appel à des fonctions mises en oeuvre par le module de cryptographie. Le dispositif comprend une mémoire vive comprenant une première zone mémoire sécurisée et dédiée au module de cryptographie et une deuxième zone mémoire dédiée au module client. Lorsque le module client fait appel à une suite de fonctions de mise en oeuvre par le module de cryptographie comprenant une première fonction et au moins une deuxième fonction, chaque deuxième fonction devant être exécutée à la suite de la première fonction ou d'une autre deuxième fonction et donnant un résultat d'exécution devant être ajouté à un résultat d'exécution de la fonction de la suite la précédant, chaque résultat d'exécution est ajouté à une valeur contenue dans une mémoire tampon allouée dans la première mémoire. La valeur contenue dans la mémoire tampon est copiée dans la deuxième zone mémoire suite à l'exécution de la dernière fonction de la suite.

Fig. 3

EP 3 242 215 A1

**Description**

L'invention concerne un procédé d'optimisation d'écriture en mémoires dans un dispositif mettant en oeuvre une pluralité de modules logiciels, un premier module logiciel comprenant des fonctions permettant de mettre en oeuvre un algorithme de cryptographie, et un dispositif mettant en oeuvre ledit procédé.

L'invention est plus particulièrement adaptée au domaine des cartes à puce.

Une carte à puce comporte au moins un circuit intégré capable de contenir et de traiter de l'information. Le circuit intégré, *i.e.* la puce, contient un microprocesseur ou un microcontrôleur capable de traiter l'information qui est stockée dans une mémoire.

Le microprocesseur (ou le microcontrôleur) permet de mettre en oeuvre un système d'exploitation au sein de la carte puce. Java Card est une technologie permettant de définir un système d'exploitation fournissant essentiellement un environnement d'exécution pour un sous-ensemble d'un langage de programmation appelé Java, ledit sous-ensemble étant spécifiquement destiné aux applications pour cartes à puce. Cet environnement d'exécution, appelé JCRE (« Java Card Runtime Environment » en terminologie anglo-saxonne) comporte un interpréteur, appelé *machine virtuelle,* JCVM (« Java Card Virtual Machine » en terminologie anglo-saxonne anglais), permettant l'exécution de codes intermédiaires correspondant à des fonctions ou applications, aussi dénommées *applets,* installées en mémoire non volatile sur la carte à puce. Le système d'exploitation fait appel à des librairies, dites *librairies natives,* contenant des fonctions de base (APIs, pour « Application Programming Interfaces » en terminologie anglo-saxonne) utiles à un développement d'applications pour cartes à puce.

Une carte à puce est un dispositif principalement utilisé comme moyen d'identification personnelle, comme moyen de paiement, ou comme moyen de preuve d'abonnement à des services prépayés. Chacune des utilisations citées précédemment peut être considérée comme sensible, notamment parce qu'elles utilisent des données confidentielles contenues dans la carte à puce. Une carte à puce est destinée à échanger des données confidentielles avec d'autres dispositifs. Par exemple, une carte à puce utilisée comme moyen de paiement échange des données confidentielles avec des terminaux de paiement. Il est nécessaire que ces échanges de données se fassent de manière sécurisée pour éviter toute récupération illicite de données confidentielles. C'est la raison pour laquelle, la plupart des cartes à puce comprennent des librairies natives implémentant des algorithmes de cryptographie.

Un algorithme de cryptographie est un algorithme qui vise à protéger des données, en assurant, par exemple, leur confidentialité, leur authenticité ou leur intégrité, grâce aux mathématiques. Toutefois, le fait qu'un algorithme de cryptographie soit sécurisé d'un point de vue mathématique ne garantit pas nécessairement qu'une mise en oeuvre pratique de cet algorithme de cryptographie par un dispositif électronique soit sécurisée.

En effet, les algorithmes de cryptographie sont souvent décrits de façon précise dans des spécifications accessibles au public. Or, il est bien connu que lorsqu'un dispositif électronique non protégé exécute un logiciel mettant en oeuvre un algorithme de cryptographie d'une manière « naïve », *i.e.* d'une manière qui se contente de produire un résultat numérique attendu selon la spécification de cet algorithme à partir d'une entrée donnée, il est souvent possible d'obtenir des informations confidentielles sur le déroulement de l'algorithme de cryptographie en effectuant des observations extérieures de certains paramètres de fonctionnement du dispositif électronique. C'est ainsi qu'un attaquant désirant obtenir des données confidentielles du dispositif électronique, peut analyser des bruits générés par le dispositif électronique, des émanations électromagnétiques, une image thermique ou encore une consommation électrique du dispositif électronique pour obtenir des données confidentielles.

Afin de se prémunir contre des attaques, il est possible de sécuriser le dispositif électronique lui-même. Par exemple, il est possible de superposer un bruit sur l'alimentation électrique afin de rendre son exploitation difficile, de lisser la consommation électrique (par exemple, en utilisant des condensateurs), de limiter les émissions électromagnétiques par des blindages adéquats, etc.

Un procédé de sécurisation connu consiste à masquer les données confidentielles. Les données confidentielles peuvent par exemple être des clés de cryptage et/ou un message d'entrée devant par exemple être chiffré par un algorithme de cryptographie, et/ou certaines données intermédiaires manipulées durant l'exécution de l'algorithme de cryptographie. Plusieurs procédés de sécurisation par masquage ont été proposés. On peut ainsi citer les masquages de type additif où une donnée $X$ manipulée par un algorithme de cryptographie est remplacée par une donnée masquée $X \oplus M$ où $\oplus$ désigne un ou exclusif et $M$ est une donnée de masquage qui peut être différente à chaque utilisation.

Une carte puce, telle qu'elle est produite par un fournisseur de cartes à puce, peut être vue comme une carte à puce générique pouvant avoir plusieurs utilisations. Cette carte à puce comporte un certain nombre de librairies natives permettant de mettre en oeuvre des fonctions diverses sur la carte à puce, dont des librairies permettant de mettre en oeuvre des modules logiciels, dits *modules de cryptographie,* aptes à mettre en oeuvre diverses fonctions manipulant des données confidentielles comme par exemple des fonctions relatives à des algorithmes de cryptographie et/ou des fonctions de plus bas niveau implémentant de l'arithmétique modulaire (*i.e.* addition, soustraction, multiplication, etc). Par la suite nous regroupons toutes les fonctions mises en oeuvre par un module de cryptographie sous le terme de *fonctions de cryptographie.* Afin que cette carte générique puisse répondre à une utilisation spécifique, il peut être nécessaire de la configurer *a posteriori.* C'est ainsi que certains fournisseurs de cartes à puce fournissent à leurs clients des cartes à puce dans lesquelles chaque client, selon ses besoins spécifiques, peut introduire ses propres librairies. Chacune de ces librairies, dites *librairies client,* une fois chargées sur une carte à puce, est apte à mettre en oeuvre des modules logiciels, dits *modules client,* donnant accès à des fonctions spécifiques du client, appelées *fonctions client* par la suite. Un premier module logiciel peut, par ailleurs, invoquer des fonctions mises en oeuvre par un deuxième module logiciel. Notamment, un module client peut invoquer des fonctions mises en oeuvre par le module de cryptographie. Permettre un accès à des fonctions de cryptographie à partir d'un module client peut constituer une faille de sécurité. En effet, alors qu'un module de cryptographie peut être fortement sécurisé, par exemple en utilisant des méthodes de masquage dans les fonctions de cryptographie, le degré de sécurisation d'un module client peut être inférieur, ce qui peut constituer un point d'entrée pour une attaque.

Afin de limiter les risques d'introduction de failles de sécurité dans les cartes à puce par les clients, les fournisseurs de cartes à puce contraignent fortement les échanges de données entre les modules client et les modules de cryptographie. Une méthode connue permettant de limiter les failles de sécurité consiste à compartimenter les exécutions des fonctions client mises en oeuvre par un module client et des fonctions de cryptographie mises en oeuvre par un module de cryptographie ainsi que les espaces mémoires dédiés à ces modules. Par exemple, un module client n'accède jamais directement à une fonction de cryptographie et un module client n'accède jamais à une zone mémoire si cette zone mémoire n'est pas certifiée comme ne contenant pas des données confidentielles issues d'un module de cryptographie.

Lorsqu'un module client doit faire appel à une fonction de cryptographie pour faire une opération, il fait appel à un module logiciel, dit *module d'interface,* implémenté par une librairie native fournissant une interface entre le module client et le module de cryptographie. En d'autres termes, le module client n'appelle pas directement des fonctions de cryptographie mais demande au module d'interface d'appeler ces fonctions de cryptographie. Un problème inhérent à cette approche est que, lorsqu'un module client exécute une opération nécessitant plusieurs calculs intermédiaires, chaque calcul intermédiaire faisant intervenir une fonction de cryptographie, il se produit une succession de copies de variables et de résultats intermédiaires en mémoire. D'un point de vue performance, ces multiples copies ralentissent la mise en oeuvre de l'opération du module client. Par ailleurs, d'un point de vue sécuritaire, il est connu que plus il y a de copies de résultats intermédiaires obtenues à partir de fonctions manipulant des données confidentielles, plus le risque de rendre ces données confidentielles accessibles par des personnes non habilitées augmente.

Il est souhaitable de pallier ces inconvénients de l'état de la technique. Il est notamment souhaitable de proposer une méthode et un dispositif permettant de fluidifier les échanges entre un module client et un module de cryptographie afin d'obtenir des temps d'exécution plus courts, sans pour autant augmenter les risques d'introduction de failles de sécurité dans les cartes à puce.

Selon un premier aspect de l'invention, l'invention concerne un procédé d'optimisation d'écritures en mémoires dans un dispositif mettant en oeuvre une pluralité de modules logiciels, un premier module logiciel comprenant des fonctions manipulant des données confidentielles, un troisième module logiciel permettant à des fonctions d'un deuxième module logiciel, dites fonctions client, d'appeler des fonctions du premier module logiciel, dites fonctions de cryptographie, le dispositif comprenant une mémoire vive divisée en une pluralité de zones mémoires, une première zone mémoire de la pluralité étant sécurisée et pouvant être utilisée exclusivement par le premier et le troisième modules logiciels, une deuxième zone mémoire pouvant être utilisée exclusivement par le deuxième et le troisième modules logiciels. Le procédé comprend: obtenir une suite de fonctions client comprenant une première fonction client et au moins une deuxième fonction client, chaque deuxième fonction client devant être exécutée à la suite de la première fonction client ou d'une autre deuxième fonction client et donnant un résultat d'exécution devant être ajouté à un résultat d'exécution de la fonction client la précédant dans la suite, chaque fonction client de la suite faisant appel à une fonction de cryptographie ; allouer une mémoire tampon dans la première zone mémoire et initialiser cette mémoire tampon à une valeur égale à une valeur prédéfinie ; lancer une exécution séquentielle de chaque fonction client de la suite, chaque exécution d'une desdites fonctions client comprenant un appel, par l'intermédiaire du troisième module logiciel, à la fonction de cryptographie concernée par ladite fonction client provoquant une exécution de ladite fonction de cryptographie dans la première zone mémoire, le résultat d'exécution de ladite fonction de cryptographie étant additionné à la valeur contenue dans la mémoire tampon ; et copier, dans la deuxième zone mémoire, la valeur contenue dans la mémoire tampon suite à l'exécution de la dernière fonction client de la suite.

Le procédé évite de copier des résultats intermédiaires entre la première zone mémoire et la deuxième zone mémoire lors de chaque exécution d'une fonction de cryptographie. Le nombre de copies mémoires est donc réduit.

Selon un mode de réalisation, la première zone mémoire est bloquée en lecture et écriture par défaut et n'est débloquée que lors d'une exécution d'une fonction de cryptographie, la deuxième zone mémoire étant bloquée en lecture et écriture pendant chaque exécution d'une fonction de cryptographie.

Selon un mode de réalisation, la mémoire vive comprend une troisième zone mémoire, par laquelle transite chaque donnée échangée entre le premier et le deuxième modules logiciels depuis la première zone mémoire vers la deuxième zone mémoire ou depuis la deuxième zone mémoire vers la première zone mémoire.

Selon un mode de réalisation, chaque donnée échangée entre le premier et le deuxième modules logiciels est copiée de la première zone mémoire dans la deuxième zone mémoire ou de la deuxième zone mémoire dans la première zone mémoire, et préalablement à chaque copie une vérification est mise en oeuvre permettant de s'assurer que la première zone mémoire ne contient aucune donnée confidentielle et, si la première zone mémoire contient des données confidentielles, lesdites données confidentielles sont effacées.

Selon un deuxième aspect de l'invention, l'invention concerne un dispositif comprenant des moyens pour mettre en oeuvre le procédé selon le premier aspect.

Selon un mode de réalisation, le dispositif est une carte à puce.

Selon un troisième aspect de l'invention, l'invention concerne un programme d'ordinateur, comprenant des instructions pour mettre en oeuvre, par un dispositif, le procédé selon le premier aspect lorsque ledit programme est exécuté par un processeur dudit dispositif.

Selon un quatrième aspect, l'invention concerne des moyens de stockage stockant un programme d'ordinateur comprenant des instructions pour mettre en oeuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement une architecture matérielle d'un dispositif, tel qu'une carte à puce, dans lequel la présente invention peut être implémentée ;
- la Fig. 2 illustre schématiquement un exemple de configuration d'une mémoire vive utilisée dans l'invention ;
- la Fig. 3 illustre schématiquement un exemple d'un procédé selon l'invention exécutant une pluralité de fonctions faisant appel à des fonctions de cryptographie;
- la Fig. 4 illustre schématiquement une exécution d'une fonction client faisant appel à une fonction de cryptographie; et,
- La Fig. 5 détaille une étape de copie d'un résultat d'exécution d'une suite de fonctions client faisant appel à des fonctions de cryptographie, d'une zone mémoire sécurisée vers une zone mémoire non sécurisée.

La description qui suit détaille plus particulièrement des modes de réalisation de la présente invention dans un contexte de carte à puce. Les principes décrits ici s'appliquent toutefois à d'autres types de cartes ou dispositifs électroniques que les cartes à puce. L'invention s'applique par exemple à des cartes électroniques contenues dans des téléphones intelligents ou dans des ordinateurs implémentant un système d'exploitation comportant des librairies natives permettant d'implémenter au moins un module de cryptographie ou, plus largement, des modules manipulant des données confidentielles, lesdites cartes électroniques étant génériques mais pouvant être adaptées à des besoins spécifiques d'un client en permettant une introduction de librairies clients permettant d'implémenter des modules client utilisant des fonctions des librairie natives.

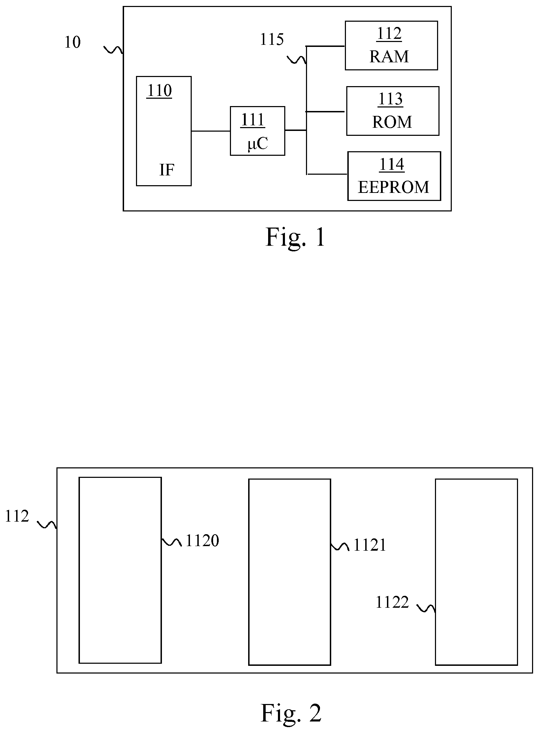

La **Fig. 1** illustre schématiquement une architecture matérielle d'un dispositif 10 dans lequel la présente invention peut être implémentée. Dans un mode de réalisation, le dispositif 10 est une carte à puce.

La carte à puce 10 comporte une interface 110 configurée pour connecter la carte à puce 10 à un lecteur de carte (non représenté sur la Fig. 1). La carte à puce 10 est par exemple une carte bancaire et le lecteur de carte est un terminal de paiement. L'interface 110 est configurée pour permettre d'effectuer des échanges de données entre le lecteur de carte et la carte à puce 10, notamment de permettre au lecteur de carte d'envoyer des commandes à la carte à puce 10, et aussi permettre au lecteur de carte d'alimenter en énergie la carte à puce 10.

La carte à puce 10 comporte en outre un processeur, typiquement sous la forme d'un microcontrôleur 111 ou d'un microprocesseur, en charge d'effectuer des traitements au sein de la carte à puce 10 : calculs, transferts de données, etc.

La carte à puce 10 comporte en outre une mémoire vive RAM (« Random Access Memory» en terminologie anglo-saxonne) 112, une mémoire morte ROM (« Read Only Memory» en terminologie anglo-saxonne) 113, et une mémoire non volatile, comme par exemple une mémoire EEPROM (« Electronically Erasable Programmable ROM » en terminologie anglo-saxonne) 114. La mémoire vive 112, la mémoire morte 113 et la mémoire non volatile 114 sont reliées au microcontrôleur 111 par un bus de communication 115.

La mémoire morte 113 contient typiquement des instructions causant l'implémentation d'un environnement d'exécution JCRE au sein de la carte à puce 10, en s'appuyant sur la mémoire vive 112.

La mémoire vive 112 est utilisée pour stocker temporairement des données, telles que des variables et des résultats intermédiaires de calculs.

La mémoire 114 contient un ensemble d'instructions correspondant à des fonctions offertes par des librairies (natives ou client) stockées sur la carte à puce 10. Ces fonctions sont regroupées en une pluralité de modules logiciels.

Lorsque la carte à puce 10 est alimentée en énergie par le lecteur de carte via l'interface 110, le microcontrôleur 111 est capable d'exécuter des instructions, notamment sous forme de code intermédiaire, à partir de la mémoire morte 113 et/ou de la mémoire non volatile 114. Par la suite, lorsque le microcontrôleur 111 exécute (*i.e.* met en oeuvre) des instructions relatives à une fonction d'un module logiciel, nous dirons pour simplifier, que le module logiciel exécute (*i. e.* met en oeuvre) une fonction. Par ailleurs, lorsque le microcontrôleur 111 exécute (*i.e.* met en oeuvre) des instructions relatives à une fonction d'un premier module logiciel permettant de lancer une exécution (*i.e.* une mise en oeuvre) par le microcontrôleur 111 d'une fonction d'un deuxième module logiciel, nous dirons que le premier module logiciel appelle la fonction du deuxième module logiciel.

A noter que, lorsque le système d'exploitation est implémenté sur un dispositif électronique autre qu'une carte à puce, le microcontrôleur 111 est capable d'exécuter des instructions chargées dans la mémoire vive RAM 112 à partir de la mémoire morte ROM 113 et/ou de la mémoire EEPROM 114, une fois que ledit dispositif électronique est alimenté en énergie.

Dans un mode de réalisation, la carte à puce 10 comprend une librairie client appelée LIB_CLI et une librairie native appelée LIB CRYPTO. La librairie native LIB_CRYPTO permet d'implémenter un module de cryptographie offrant des fonctions de cryptographie (*i.e.* des fonctions manipulant des données confidentielles comme par exemple des fonctions permettant de mettre en oeuvre un algorithme de cryptographie et des fonctions bas niveau). La librairie client LIB_CLI permet d'implémenter un module client offrant des fonctions client faisant appel à des fonctions de cryptographie du module de cryptographie. Chaque appel à une fonction de cryptographie par le module client est indirect. En effet, la carte à puce 10 comprend en outre une librairie native LIB_INTER permettant d'implémenter un module d'interface entre le module client et le module de cryptographie. Par exemple, lorsque le module client fait appel à une fonction de cryptographie FCT_CRYPTO du module de cryptographie, il fournit un identifiant de la fonction de cryptographie FCT_CRYPTO au module d'interface, qui se charge de l'appel effectif de la fonction de cryptographie FCT_CRYPTO, la fonction de cryptographie étant mise en oeuvre par le module de cryptographie. Par ailleurs, le module d'interface se charge de copies en mémoire vive 112 de paramètres et résultats de fonctions. L'utilisation d'un accès indirect par l'intermédiaire d'un module d'interface aux fonctions de cryptographie par le module client plutôt qu'un accès direct permet de limiter les risques de failles de sécurité.

Afin d'accroître la sécurisation des données confidentielles utilisées par le module de cryptographie, dans un mode de réalisation, la mémoire vive RAM 112 est divisée en une pluralité de zones mémoires dédiées. Le module client et le module de cryptographie utilisent des zones mémoires dédiées distinctes, ce qui évite que le module client (*i.e.* qu'une fonction exécutée par le module client) ait accès à des données confidentielles manipulées par le module de cryptographie.

La **Fig. 2** illustre schématiquement un exemple de configuration d'une mémoire vive utilisée dans l'invention.

Dans un mode de réalisation correspondant à l'exemple illustré en Fig. 2, la mémoire vive 112 est divisée en trois zones mémoires :

- Une zone mémoire 1120, appelée RAM_LIB_CLIENT, dédiée au module client ;
- Une zone mémoire 1121, appelée RAM_CRYPTO, dédiée au module de cryptographie;
- Une zone mémoire 1122, appelée RAM_SHARED, dédiée à des partages de données entre le module client et le module de cryptographie.

La zone mémoire RAM_CRYPTO 1121 est une zone mémoire sécurisée. En effet, lorsque le module de cryptographie (i.e. lorsqu'une fonction de cryptographie exécutée par le module de cryptographie) manipule une donnée confidentielle, celle-ci est reçue par le module de cryptographie sous forme masquée et n'est démasquée que dans la zone mémoire RAM_CRYPTO 1121. Par ailleurs, le module client n'a jamais accès directement à la zone mémoire RAM_CRYPTO 1121. On peut noter que d'autres solutions de sécurisation connues peuvent être utilisées en remplacement ou en combinaison avec les solutions citées dans ce mode de réalisation.

Le module de cryptographie ne peut écrire et lire que dans la zone mémoire RAM_CRYPTO 1121.

Le module client ne peut écrire et lire que dans la zone mémoire RAM_LIB_CLIENT 1120.

Seul le module d'interface peut écrire et lire dans les trois zones mémoires RAM_LIB_CLIENT 1120, RAM_CRYPTO 1121 et RAM_SHARED 1122.

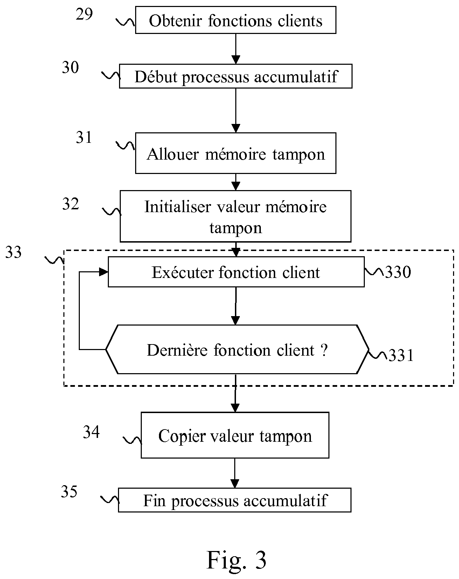

La **Fig. 3** illustre schématiquement un exemple d'un procédé selon l'invention dans lequel le module client fait appel à des fonctions de cryptographie.

Afin d'illustrer ce procédé, nous prenons l'exemple de l'opération OP suivante:

$$OP: RES_{FINAL} = (r.d)mod(q) + (k.e)mod(q)$$

où $RES_{FINAL}$ est un résultat final de l'opération OP, *r, d, k,* et *e* sont des paramètres de l'opération OP, $(x)mod(q)$ est l'opération modulo calculant le reste de la division euclidienne d'une variable *x* par une variable *q*.

L'opération OP peut se décomposer en deux sous-opérations :

$$RES^1_{INTER} = (r.d)mod(q)$$

$$RES^2_{INTER} = (k.e)mod(q)$$

où $RES^1_{INTER}$ et $RES^2_{INTER}$ sont des résultats intermédiaires. L'opération OP a été stockée sous forme d'un programme d'ordinateur, par exemple sous forme de code intermédiaire, dans la mémoire non volatile 114 de la carte à puce. Ce programme comprend une suite de fonctions client. Cette suite de fonction client comprend une première fonction client FCT_CLI_1 prenant les deux paramètres *r* et *d* en entrée et implémentant la sous-opération $(r.d)mod(q)$ et une deuxième fonction client FCT_CLI_2 prenant les deux paramètres *k* et *e* en entrée et implémentant la sous-opération $(k.e)mod(q)$. Le résultat de la sous-opération $(k.e)mod(q)$ doit être ajouté au résultat de la sous-opération $(r.d)mod(q)$. Chaque fonction client de la suite de fonctions client fait appel à une fonction de cryptographie pour mettre en oeuvre l'opération OP. Dans l'exemple de l'opération OP, chaque fonction client (FCT_CLI_1 et FCT_CLI_2) fait appel à une même fonction de cryptographie FCT_CRYPTO réalisant la sous-opération $(i.j)mod(q)$, où *i* et *j* sont deux variables dont on souhaite calculer un produit modulo *q*.

On note que la suite de fonctions client pourrait contenir une première fonction client et une pluralité de deuxièmes fonctions client, chaque deuxième fonction client devant être exécutée à la suite de la première fonction client ou d'une autre deuxième fonction client et donnant un résultat d'exécution devant être ajouté à un résultat d'exécution de la fonction client la précédant dans la suite, chaque fonction client de la suite faisant appel à une fonction de cryptographie, des fonctions de cryptographie différentes pouvant être appelées.

Comme nous l'avons vu plus haut chaque appel à une fonction de cryptographie par le module client se fait par l'intermédiaire du module d'interface. Par exemple dans le programme d'ordinateur, l'appel à la fonction de cryptographie FCT_CRYPTO par la fonction client FCT_CLI_1 se fait par l'intermédiaire d'une fonction d'interface FCT_INTER du module d'interface prenant en entrée un identifiant de la fonction de cryptographie FCT_CRYPTO et les paramètres *r* et *d.*

Lorsque la carte à puce 10 est alimentée en énergie par le lecteur de carte via l'interface 110, le microcontrôleur 111 exécute le programme d'ordinateur implémentant l'opération OP en chargeant ledit programme à partir de la mémoire non volatile 114.

Dans une étape 29, le module client (*i.e.* le microcontrôleur 111 exécutant des instructions relatives à une fonction du module client) obtient la liste des fonctions client.

Dans une étape 30, le module client démarre un processus accumulatif en informant le module d'interface qu'un processus accumulatif va démarrer (*i.e.* le module client exécute une fonction client transmettant au module d'interface une information représentative d'un démarrage d'un processus accumulatif, de manière à ce que le module d'interface prenne en compte ladite information pendant ses exécutions de fonctions d'interface). Lorsque le module d'interface est informé qu'un processus accumulatif va démarrer, il en informe le module de cryptographie (*i.e.* le module d'interface exécute une fonction d'interface transmettant au module de cryptographie une information représentative d'un démarrage d'un processus accumulatif, de manière à ce que le module de cryptographie prenne en compte ladite information pendant ses exécutions de fonctions de cryptographie). Un processus accumulatif est une suite de fonctions, chaque fonction donnant un résultat devant être additionné à une valeur contenue dans une même mémoire tampon (buffer en terminologie anglo-saxonne).

Dans une étape 31, le module d'interface alloue une mémoire tampon dans la zone mémoire RAM_CRYPTO 1121. Dans l'exemple de l'opération OP, cette mémoire tampon est destinée à accumuler les résultats de chaque exécution de la fonction de cryptographie FCT CRYPTO.

Dans une étape 32, le module d'interface initialise la mémoire tampon à une valeur prédéfinie. Dans un mode de réalisation, la mémoire tampon est initialisée à zéro.

Dans une étape 33, le module client lance une exécution séquentielle de chaque fonction client de la suite. Chaque exécution d'une desdites fonctions client comprend un appel, par l'intermédiaire du module d'interface, à la fonction de cryptographie concernée par ladite fonction client provoquant une exécution par le module de cryptographie de ladite fonction de cryptographie dans la zone mémoire RAM_CRYPTO 1121. Le résultat d'exécution de ladite fonction de cryptographie est additionné à la valeur contenue dans la mémoire tampon par le module de cryptographie.

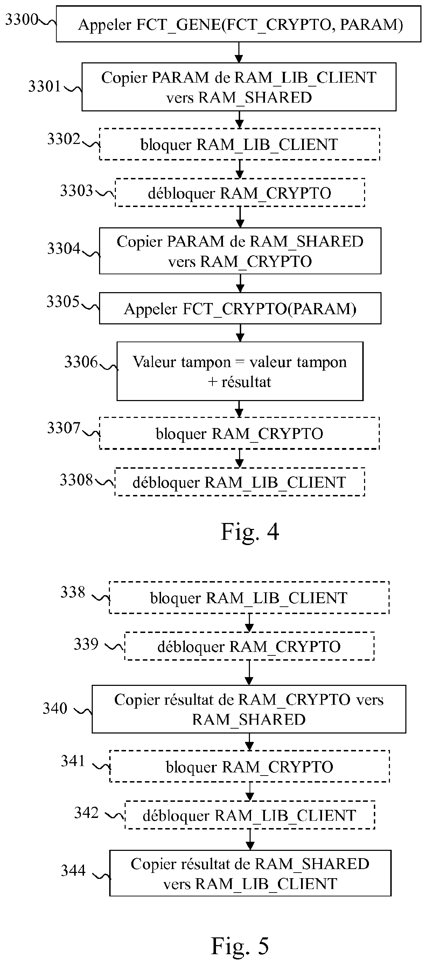

L'étape 33 est donc une étape itérative. Au cours de chaque itération, lors d'une étape 330 que nous détaillons en relation avec la Fig. 4, le module client exécute une des fonctions client de la suite.

La **Fig. 4** illustre schématiquement une exécution d'une fonction client de la suite faisant appel à la fonction de cryptographie FTC_CRYPTO.

Dans une étape 3300, le module client appelle la fonction d'interface FCT_INTER avec pour paramètres l'identifiant de la fonction de cryptographie FCT_CRYPTO et les deux paramètres $r$ et $d$.

Dans une étape 3301, le module d'interface copie les deux paramètres $r$ et $d$ de la zone mémoire RAM_LIB_CLIENT 1120 vers la zone mémoire RAM_SHARED 1122.

Dans une étape 3304, le module d'interface copie les deux paramètres $r$ et $d$ de la zone mémoire RAM SHARED 1120 vers la zone mémoire RAM_CRYPTO 1122.

Dans une étape 3305, le module d'interface appelle la fonction de cryptographie FCT_CRYPTO avec les paramètres $r$ et $d$, ce qui provoque l'exécution de la fonction de cryptographie FCT_CRYPTO par le module de cryptographie.

Dans une étape 3306, le module de cryptographie ajoute le résultat de l'exécution de la fonction de cryptographie FCT_CRYPTO à la valeur de la mémoire tampon et conserve la valeur obtenue dans la mémoire tampon.

De retour à la Fig. 3, lors d'une étape 331, le module client vérifie si la fonction client exécutée lors de l'étape 330 est la dernière fonction client de la suite. Si cette fonction client n'est pas la dernière de la suite, le module client exécute de nouveau l'étape 330 avec la fonction suivante dans la suite. Dans l'exemple de l'opération OP, le module client réalise deux itérations lors de l'étape 33, une première durant laquelle il met en oeuvre la fonction client FCT_CLI_1 et ajoute le résultat de cette mise en oeuvre à la valeur de la mémoire tampon (à la valeur zéro lors de la première itération) et une seconde durant laquelle il met en oeuvre la fonction client FCT_CLI_2 et ajoute le résultat de cette mise en oeuvre à la valeur de la mémoire tampon (au résultat de l'exécution de la fonction client FCT_CLI_1 lors de la deuxième itération).

Lorsque toutes les fonctions client de la suite ont été exécutées, le module client demande la valeur de la mémoire tampon au module d'interface. Le module d'interface met alors en oeuvre une étape 34, que nous détaillons par la suite en relation avec la Fig. 5, au cours de laquelle il copie dans la zone mémoire RAM_LIB_CLIENT 1120 la valeur contenue dans la mémoire tampon.

Dans une étape 35, suite à la mise en oeuvre de l'étape 34, le module d'interface sait que le processus accumulatif est terminé. Le module d'interface désalloue alors la mémoire tampon.

La **Fig. 5** détaille l'étape 34 de copie du résultat d'exécution de la suite de fonctions client FCT_CLI_1 et FCT_CLI_2 faisant appel à la fonction de cryptographie FCT_CRYPTO de la mémoire tampon vers la zone mémoire RAM_LIB_CLIENT 1120.

Dans des étapes 340 et 344, le module d'interface exécute une fonction d'interface FCT_INTER_2. Lors de l'étape 340, le module d'interface copie le résultat d'exécution de la suite de fonctions client de la mémoire tampon vers la zone mémoire RAM_SHARED 1122. Lors de l'étape 344, le module d'interface copie le résultat d'exécution de la suite de fonctions client de la zone mémoire RAM_SHARED 1122 vers la zone mémoire RAM_LIB_CLIENT 1120.

Dans un mode de réalisation, la zone mémoire RAM_CRYPTO 1121 est bloquée par défaut de manière à interdire toute lecture et écriture dans cette zone mémoire. Dans ce mode de réalisation, deux étapes 3302 et 3303 s'intercalent entre les étapes 3301 et 3304. Lors de l'étape 3302, le module d'interface bloque la zone mémoire RAM_LIB_CLIENT 1120. Lors de l'étape 3303, le module d'interface débloque la zone mémoire RAM_CRYPTO 1121. Par ailleurs, dans ce mode de réalisation, l'étape 3306 est suivie de deux étapes 3307 et 3308. Lors de l'étape 3307, le module d'interface bloque la zone mémoire RAM_CRYPTO 1121. Lors de l'étape 3308, le module d'interface débloque la zone mémoire RAM_LIB_CLIENT 1120. Un principe identique est appliqué lors de l'étape 34, l'étape 340 étant précédée de deux étapes 338 et 339. Lors de l'étape 338, le module d'interface bloque la zone mémoire RAM_LIB_CLIENT 1120. Lors de l'étape 339, le module d'interface débloque la zone mémoire RAM_CRYPTO 1121. Deux étapes 341 et 342 s'intercalent entre les étapes 340 et 344. Lors de l'étape 341, le module d'interface bloque la zone mémoire RAM_CRYPTO 1121. Lors de l'étape 342, le module d'interface débloque la zone mémoire RAM_LIB_CLIENT 1120. Ce mode de réalisation renforce la sécurité puisque les accès à la zone mémoire RAM_CRYPTO ne sont autorisés que lorsque cela est strictement nécessaire.

Dans un mode de réalisation, la mémoire vive 112 ne comprend que la zone mémoire RAM_LIB_CLIENT et la zone mémoire RAM_CRYPTO. Dans ce mode de réalisation, le module d'interface copie directement de la zone mémoire RAM_LIB_CLIENT vers la zone mémoire RAM_CRYPTO et inversement. Toutefois, préalablement à chaque copie dans la zone mémoire RAM_CRYPTO, le module d'interface effectue une vérification permettant de s'assurer que la zone mémoire RAM_CRYPTO ne contient aucune donnée confidentielle et, si la zone mémoire RAM_CRYPTO contient des données confidentielles, il efface ces données confidentielles.

**Revendications**

**1.** Procédé d'optimisation d'écritures en mémoires dans un dispositif mettant en oeuvre une pluralité de modules logiciels, un premier module logiciel comprenant des fonctions manipulant des données confidentielles, un troisième module logiciel permettant à des fonctions d'un deuxième module logiciel, dites fonctions client, d'appeler des fonctions du premier module logiciel, dites fonctions de cryptographie, chaque module logiciel étant stocké dans une mémoire non volatile (114) dudit dispositif, et étant exécuté dans un environnement d'exécution comportant un interpréteur stocké dans une mémoire morte (113) dudit dispositif, ladite mémoire vive (112) étant divisée en une pluralité de zones mémoires, une première zone mémoire (1121) de la pluralité étant sécurisée et pouvant être utilisée exclusivement par le premier et le troisième modules logiciels, une deuxième zone mémoire (1120) pouvant être utilisée exclusivement par le deuxième et le troisième modules logiciels, **caractérisé en ce que** le procédé comprend:

obtenir (29) une suite de fonctions client comprenant une première fonction client et au moins une deuxième fonction client, chaque deuxième fonction client devant être exécutée à la suite de la première fonction client ou d'une autre deuxième fonction client et donnant un résultat d'exécution devant être ajouté à un résultat d'exécution de la fonction client la précédant dans la suite, chaque fonction client de la suite faisant appel à une fonction de cryptographie ;

allouer (31) une mémoire tampon dans la première zone mémoire (1121) et initialiser (32) cette mémoire tampon à une valeur égale à une valeur prédéfinie ;

lancer (33) une exécution séquentielle de chaque fonction client de la suite, chaque exécution d'une desdites fonctions client comprenant un appel, par l'intermédiaire du troisième module logiciel, à la fonction de cryptographie concernée par ladite fonction client provoquant une exécution de ladite fonction de cryptographie dans la première zone mémoire (1121), le résultat d'exécution de ladite fonction de cryptographie étant additionné (3306) à la valeur contenue dans la mémoire tampon ;

copier (34), dans la deuxième zone mémoire (1120), la valeur contenue dans la mémoire tampon suite à l'exécution de la dernière fonction client de la suite.

**2.** Procédé selon la revendication 1, **caractérisé en ce que** la première zone mémoire est bloquée en lecture et écriture par défaut et n'est débloquée que lors d'une exécution d'une fonction de cryptographie, la deuxième zone mémoire étant bloquée en lecture et écriture pendant chaque exécution d'une fonction de cryptographie.

**3.** Procédé selon la revendication 1 ou 2, **caractérisé en ce que** la mémoire vive (112) comprend une troisième zone mémoire, par laquelle transite chaque donnée échangée entre le premier et le deuxième modules logiciels depuis la première zone mémoire vers la deuxième zone mémoire ou depuis la deuxième zone mémoire vers la première zone mémoire.

**4.** Procédé selon la revendication 1 ou 2, **caractérisé en ce que** chaque donnée échangée entre le premier et le deuxième modules logiciels est copiée de la première zone mémoire dans la deuxième zone mémoire ou de la deuxième zone mémoire dans la première zone mémoire, et préalablement à chaque copie une vérification est mise en oeuvre permettant de s'assurer que la première zone mémoire ne contient aucune donnée confidentielle et, si la première zone mémoire contient des données confidentielles, lesdites données confidentielles sont effacées.

**5.** Dispositif (10) comprenant des moyens pour mettre en oeuvre le procédé selon l'une quelconque des revendications 1 à 4.

**6.** Dispositif (10) selon la revendication 5 **caractérisé en ce que** le dispositif est une carte à puce.

**7.** Programme d'ordinateur, **caractérisé en ce qu'**il comprend des instructions pour mettre en oeuvre, par un dispositif (10), le procédé selon l'une quelconque des revendications 1 à 4 lorsque ledit programme est exécuté par un processeur (111) dudit dispositif (10).

**8.** Moyens de stockage (112, 113, 114), **caractérisés en ce qu'**ils stockent un programme d'ordinateur comprenant des instructions pour mettre en oeuvre, par un dispositif (10), le procédé selon l'une quelconque des revendications 1 à 4, lorsque ledit programme est exécuté par un processeur (111) dudit dispositif (10).

10

115

110

IF

111
µC

112
RAM

113
ROM

114
EEPROM

Fig. 1

112

1120

1121

1122

Fig. 2

29    Obtenir fonctions clients

30    Début processus accumulatif

31    Allouer mémoire tampon

32    Initialiser valeur mémoire tampon

33

     Exécuter fonction client      330

     Dernière fonction client ?      331

34    Copier valeur tampon

35    Fin processus accumulatif

Fig. 3

3300 — Appeler FCT_GENE(FCT_CRYPTO, PARAM)

3301 — Copier PARAM de RAM_LIB_CLIENT vers RAM_SHARED

3302 — bloquer RAM_LIB_CLIENT

3303 — débloquer RAM_CRYPTO

3304 — Copier PARAM de RAM_SHARED vers RAM_CRYPTO

3305 — Appeler FCT_CRYPTO(PARAM)

3306 — Valeur tampon = valeur tampon + résultat

3307 — bloquer RAM_CRYPTO

3308 — débloquer RAM_LIB_CLIENT

Fig. 4

338 — bloquer RAM_LIB_CLIENT

339 — débloquer RAM_CRYPTO

340 — Copier résultat de RAM_CRYPTO vers RAM_SHARED

341 — bloquer RAM_CRYPTO

342 — débloquer RAM_LIB_CLIENT

344 — Copier résultat de RAM_SHARED vers RAM_LIB_CLIENT

Fig. 5

Europäisches Patentamt

European Patent Office

Office européen des brevets

**RAPPORT DE RECHERCHE EUROPEENNE**

Numéro de la demande

EP 17 16 8586

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2006/010192 A1 (FISCHER WIELAND [DE] ET AL) 12 janvier 2006 (2006-01-12) <br> * figures 1,2,5,6,10-19 * <br> * alinéas [0003] - [0016], [0030] - [0039], [0063] - [0087], [0172] - [0205] * <br><br> * revendication 4 * <br> ----- | 1-8 | INV. <br> G06F12/14 <br> G06F12/02 <br> G06Q20/34 |
| Y | US 5 963 980 A (COULIER CHARLES [FR] ET AL) 5 octobre 1999 (1999-10-05) <br> * figures 1-3 * <br> * colonne 1, ligne 9 - colonne 4, ligne 18 * <br><br> * colonne 5, ligne 3 - colonne 6, ligne 61 * <br> ----- | 1,3,5-8 | |
| Y <br> A | US 2004/088554 A1 (KAWAGUCHI KENICHI [JP]) 6 mai 2004 (2004-05-06) <br> * figures 1,2,3,5,9 * <br> * alinéas [0001] - [0018], [0049] - [0098], [0101] - [0111], [0115], [0122], [0123] * <br> ----- | 2 <br><br> 1,3-8 | |
| Y <br> A | WO 2015/127461 A1 (AMAZON TECH INC [US]) 27 août 2015 (2015-08-27) <br> * figure 7 * <br> * alinéas [0044] - [0048] * <br> ----- | 4 <br><br> 1-3,5-8 | DOMAINES TECHNIQUES RECHERCHES (IPC) <br><br> G06F <br> G07F <br> G06Q |
| A | US 2011/083020 A1 (MICHIELS WILHELMUS P A J [NL] ET AL) 7 avril 2011 (2011-04-07) <br> * figure 1 * <br> * alinéas [0002], [0007] - [0018], [0028] - [0030] * <br> ----- <br><br> -/-- | 1-8 | |

Le présent rapport a été établi pour toutes les revendications

| Lieu de la recherche | Date d'achèvement de la recherche | Examinateur |
|---|---|---|
| La Haye | 16 août 2017 | Freitas, Arthur |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 17 16 8586

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2010/211727 A1 (BAILLY ALEXIS [FR] ET AL) 19 août 2010 (2010-08-19) * figure FIGURE * * alinéas [0001] - [0016], [0019] - [0025] * ----- | 1-8 | |
| A | Anonymous: "Appel système - Wikipédia", , 27 février 2016 (2016-02-27), XP055333543, Extrait de l'Internet: URL:https://fr.wikipedia.org/w/index.php?title=Appel_système&oldid=123775651 [extrait le 2017-01-10] * page 1, lignes 1-13 * ----- | 1-8 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 16 août 2017 | Freitas, Arthur |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 17 16 8586

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-2017

| Document brevet cité au rapport de recherche | | | Date de publication | Membre(s) de la famille de brevet(s) | | Date de publication |
|---|---|---|---|---|---|---|
| US 2006010192 | A1 | | 12-01-2006 | AU | 2003289909 A1 | 22-07-2004 |
| | | | | DE | 10260655 B3 | 24-06-2004 |
| | | | | EP | 1543408 A1 | 22-06-2005 |
| | | | | JP | 4302640 B2 | 29-07-2009 |
| | | | | JP | 2006511833 A | 06-04-2006 |
| | | | | KR | 20050089067 A | 07-09-2005 |
| | | | | TW | I290300 B | 21-11-2007 |
| | | | | US | 2006010192 A1 | 12-01-2006 |
| | | | | WO | 2004059463 A1 | 15-07-2004 |
| US 5963980 | A | | 05-10-1999 | DE | 69404674 D1 | 04-09-1997 |
| | | | | DE | 69404674 T2 | 08-01-1998 |
| | | | | EP | 0733245 A1 | 25-09-1996 |
| | | | | ES | 2105879 T3 | 16-10-1997 |
| | | | | FR | 2713803 A1 | 16-06-1995 |
| | | | | JP | 2727520 B2 | 11-03-1998 |
| | | | | JP | H09500469 A | 14-01-1997 |
| | | | | SG | 48191 A1 | 17-04-1998 |
| | | | | US | 5963980 A | 05-10-1999 |
| | | | | WO | 9516246 A1 | 15-06-1995 |
| US 2004088554 | A1 | | 06-05-2004 | CN | 1499360 A | 26-05-2004 |
| | | | | CN | 1822011 A | 23-08-2006 |
| | | | | JP | 4349788 B2 | 21-10-2009 |
| | | | | JP | 2004152123 A | 27-05-2004 |
| | | | | US | 2004088554 A1 | 06-05-2004 |
| | | | | US | 2007118761 A1 | 24-05-2007 |
| | | | | US | 2008155272 A1 | 26-06-2008 |
| WO 2015127461 | A1 | | 27-08-2015 | CA | 2939925 A1 | 27-08-2015 |
| | | | | CN | 106105146 A | 09-11-2016 |
| | | | | EP | 3111618 A1 | 04-01-2017 |
| | | | | JP | 2017508384 A | 23-03-2017 |
| | | | | US | 2015244716 A1 | 27-08-2015 |
| | | | | WO | 2015127461 A1 | 27-08-2015 |
| US 2011083020 | A1 | | 07-04-2011 | CA | 2713663 A1 | 06-08-2009 |
| | | | | CN | 101978647 A | 16-02-2011 |
| | | | | EP | 2238709 A1 | 13-10-2010 |
| | | | | JP | 2011512726 A | 21-04-2011 |
| | | | | KR | 20100120671 A | 16-11-2010 |
| | | | | US | 2011083020 A1 | 07-04-2011 |
| | | | | WO | 2009095838 A1 | 06-08-2009 |
| US 2010211727 | A1 | | 19-08-2010 | EP | 2188762 A1 | 26-05-2010 |
| | | | | ES | 2416367 T3 | 31-07-2013 |

EPO FORM P0460

Pour tout renseignement concernant cette annexe : voir Journal Officiel de l'Office européen des brevets, No.12/82

page 1 de 2

**ANNEXE AU RAPPORT DE RECHERCHE EUROPEENNE**
**RELATIF A LA DEMANDE DE BREVET EUROPEEN NO.**

EP 17 16 8586

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-2017

| Document brevet cité au rapport de recherche | Date de publication | Membre(s) de la famille de brevet(s) | Date de publication |
|---|---|---|---|
| | | FR  2921175 A1 | 20-03-2009 |
| | | RU  2010114712 A | 20-10-2011 |
| | | RU  2012157283 A | 10-07-2014 |
| | | US  2010211727 A1 | 19-08-2010 |
| | | WO  2009068760 A1 | 04-06-2009 |

EPO FORM P0460

Pour tout renseignement concernant cette annexe : voir Journal Officiel de l'Office européen des brevets, No.12/82

page 2 de 2